Europäisches Patentamt

European Patent Office

Office européen des brevets

(19)

(11) Numéro de publication: **0 148 717**
**B1**

(12) **FASCICULE DE BREVET EUROPEEN**

(45) Date de publication du fascicule du brevet:
**01.06.88**

(21) Numéro de dépôt: **84440074.7**

(22) Date de dépôt: **27.12.84**

(51) Int. Cl.⁴: **F 16 L 59/02**, F 16 L 59/16, F 16 L 59/10, F 16 L 59/12

(54) Elément modulaire de conduit d'un fluide isolé thermiquement.

(30) Priorité: **06.01.84 FR 8400314**

(43) Date de publication de la demande:
**17.07.85 Bulletin 85/29**

(45) Mention de la délivrance du brevet:
**01.06.88 Bulletin 88/22**

(84) Etats contractants désignés:
**AT BE CH DE GB IT LI LU NL SE**

(56) Documents cités:
**EP - A - 0 044 468**
**EP - A - 0 085 455**
**DE - A - 2 917 844**
**DE - C - 748 136**
**DE - C - 941 245**
**FR - A - 2 339 800**
**GB - A - 2 073 837**
**GB - A - 2 118 268**

(73) Titulaire: **Razny, Jean-Marie, 5 bis rue de l'Eglise, F-62690 Frevin-Capelle (Pas-de-Calais) (FR)**

(72) Inventeur: **Razny, Jean-Marie, 5 bis rue de l'Eglise, F-62690 Frevin-Capelle (Pas-de-Calais) (FR)**

(74) Mandataire: **Gérardin, Robert Jean René, PROT'INNOV INTERNATIONAL SA Résidence de l'Observatoire avenue Georges Clémenceau Boîte Postale 2764, F-51066 Reims Cédex (FR)**

## Description

L'invention est relative à un élément modulaire de conduit d'un fluide isolé thermiquement. Elle trouvera notamment son application pour former une gaine d'évacuation des fumées.

Il est connu d'utiliser les gaines composées d'éléments modulaires emboîtés pour véhiculer les fluides. Les gaines sont ordinairement formées de tôle cintrée.

Toutefois, pour le transport de certains fluides, il est souhaitable de limiter les échanges thermiques aussi utilise-t-on des gaines isolées. Généralement, ces dernières sont confectionnées à partir de deux viroles concentriques entre lesquelles on dispose un matériau isolant thermiquement. La réalisation du conduit se fait par assemblage d'éléments modulaires, le raccordement des dits éléments modulaires étant réalisé généralement à l'aide d'un embout rapporté sur les deux éléments à assembler.

On peut cependant regretter deux inconvénients, d'une part l'embout, généralement vissé, établit un pont thermique entre la virole interne et externe d'où des déperditions calorifiques. Ensuite, les viroles interne et externe sont confectionnées selon des profils particuliers qui obligent à les usiner différemment.

Par ailleurs, du document EP-A-0 085 455 il est connu un élément modulaire de conduit de fumées isolé thermiquement.

Selon ce document, l'élément est constitué de deux viroles de formes différentes emboîtées l'une dans l'autre. A l'intérieur de l'espace formé entre les deux viroles est disposé un fil inox fixé partiellement d'une part sur la virole extérieure et d'autre part sur la virole intérieure.

Ainsi, on maintient un espace constant entre les deux viroles indépendamment de l'isolant et on supprime l'embout de raccordement entre les viroles.

Toutefois, ce document nécessite l'emploi de deux viroles différentes et oblige une réalisation compliquée et coûteuse. En effet, pour chaque type d'élément modulaire il faut une virole extérieure spécifique et une virole intérieure spécifique.

Le but principal de la présente invention est de présenter un élément modulaire de conduit d'un fluide isolé thermiquement qui puisse directement s'emboîter sur un élément voisin d'où élimination de l'embout de raccord.

Selon l'invention l'élément modulaire de conduit d'un fluide, isolé thermiquement et emboîtable, pour former une gaine, notamment d'évacuation des fumées, destinée à être disposée le long d'un support sur lequel elle est fixée, le dit élément modulaire étant constitué d'une virole extérieure en tôle et d'une virole intérieure en tôle entre lesquelles est disposé un matériau isolant, est caractérisé par le fait que le profil de la tôle constituant les dites viroles, vue en coupe selon un plan passant par l'axe des viroles, est identique pour les deux viroles, le dit profil comprenant une moulure extérieure à une des extrémités et un rétreint d'emboîtement à l'autre extrêmité, le dit profil constituant la virole extérieure étant inversé selon un plan normal à l'axe du conduit, par rapport au dit profil constituant la virole intérieure.

Le pont thermique établi entre les viroles interne et externe est extrêmement réduit, ce qui permet d'obtenir un produit de haute qualité.

Enfin, la réalisation de l'élément modulaire fait appel à un profil de pré-formage des viroles «standard». L'utilisation d'un même profil pour la confection de la virole interne et externe permet de réduire considérablement les coûts de fabrication puisque la virole externe d'un diamètre donné de conduit peut être utilisée pour la confection de la virole interne du conduit de diamètre supérieur. De la sorte, il peut être offert à la vente une gamme étendue de conduits de fluide, de dimensions différentes avec une mise en fabrication de profils limités.

En outre, la mise en place de l'élément modulaire de la présente invention est facilitée étant donné que, selon un mode préférentiel de réalisation des brides de liaison des différents éléments, les dites brides peuvent également être utilisées pour assurer la fixation du conduit sur la paroi murale ou pour assurer le haubanage du dit conduit.

D'autres avantages de la présente invention apparaîtront au cours de la description suivante.

L'invention sera mieux comprise à la lecture de la description suivante accompagnée de dessins en annexe parmi lesquels:

– la figure 1 représente en vue de coupe longitudinale un élément modulaire de conduit d'un fluide isolé thermiquement selon la présente invention,

– la figure 2 illustre une vue axiale de l'élément modulaire de la présente invention,

– la figure 3 illustre en détail la liaison entre deux éléments modulaires ainsi que la fixation des dits éléments à l'aide d'une bride rapportée,

– la figure 4 illustre en vue de coupe partielle une bride de liaison selon un mode préférentiel de réalisation de celle-ci.

La présente invention vise un élément modulaire de conduit d'un fluide isolé thermiquement destiné à former une gaine de transport du dit fluide.

L'invention trouvera notamment son application pour assurer l'évacuation des fumées.

Dans la description suivante, on limitera les détails donnés à un élément modulaire rectiligne, toutefois, il est bien évident que l'invention pourra également s'appliquer aux éléments courbes, aux coudes, aux tés, et autres formes utilisées pour la confection de gaines.

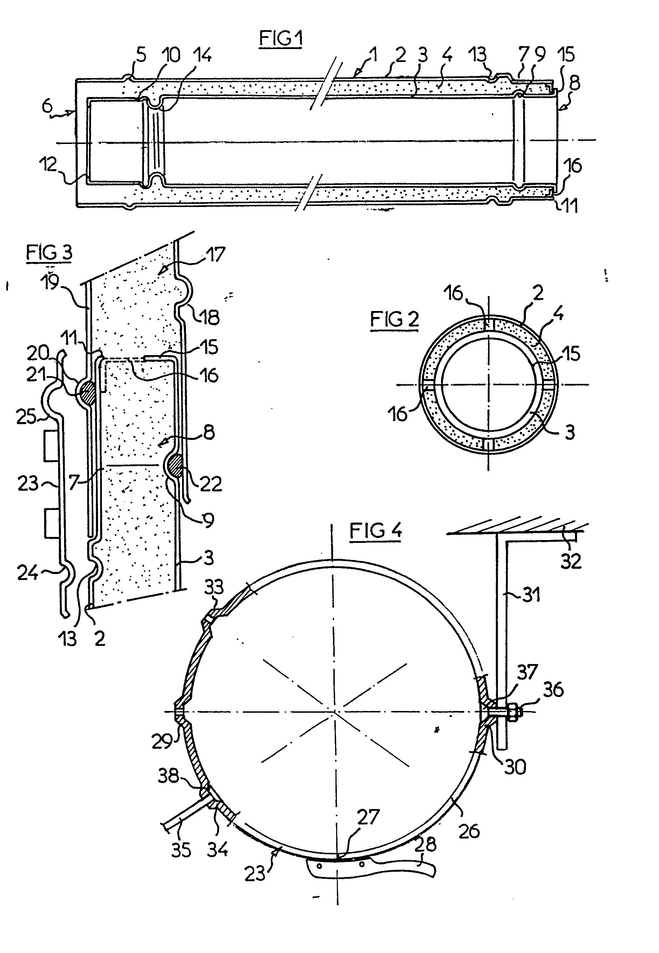

L'élément modulaire 1 représenté à la figure 1 est emboîtable avec d'autres éléments pour former une gaine continue. Le dit élément 1 est constitué d'une virole extérieure 2 et d'une virole intérieure 3 entre lesquelles est disposé un matériau isolant 4. Le matériau isolant 4 peut être de nature quelconque, il sera toutefois adapté aux températures des fluides à véhiculer.

La figure 2 illustre une vue axiale de l'élément modulaire illustré à la figure 1. Dans l'exemple choisi, il a été adopté une forme cylindrique de conduit. S'il s'agit de la forme géométrique préférentielle, il n'en demeure pas moins que l'invention peut également s'appliquer à toute autre section tubulaire.

Selon la caractéristique principale de la présente invention, les viroles extérieure 2 et intérieure 3 présentent un même profil.

L'utilisation d'un même profil est extrêmement avantageux sur le plan de la fabrication puisque la mise en forme des viroles intérieure et extérieure est identique. En outre, lors de la constitution d'une gamme de conduits, la virole extérieure d'un conduit de dimension donnée pourra servir à la confection de la virole intérieure du conduit de dimension supérieure. De la sorte, avec une fabrication simplifiée et un stockage réduit, il est possible de disposer d'une gamme complète de dimension de conduit. Les temps de fabrication et de réglage machine seront limités et par conséquent les coûts de main d'œuvre diminués ainsi que les coûts d'investissement.

La mise en place des profils de viroles extérieure 2 et intérieure 3 est inversée c'est-à-dire que les profils semblables sont inversés à chacune des extrémités de l'élément modulaire 1.

Le profil de la présente invention comprend une moulure extérieure à une extrémité et un rétreint d'emboîtement à l'autre extrémité.

Dans le cas de la figure 1, en ce qui concerne la virole extérieure 2, celle-ci comprend une moulure extérieure 5 disposée du côté de l'extrémité 6 de l'élément modulaire 1 et d'un rétreint d'emboîtement 7 situé du côté de l'extrémité 8 de l'élément modulaire 1. Le rétreint d'emboîtement correspond, dans le cas d'éléments modulaires de section circulaire à une diminution de diamètre.

En ce qui concerne la virole intérieure 3, celle-ci comprend une moulure extérieure 9 située du côté 8 de l'élément modulaire 1 et un rétreint d'emboîtement 10 située à l'extrémité 6 de l'élément modulaire 1.

Pour faciliter l'emboîtement des différents éléments modulaires 1, on dote avantageusement le profil d'un rétreint d'entrée disposé à l'extrémité du rétreint d'emboîtement.

Dans le cas de la virole extérieure 2, celle-ci est équipée d'un rétreint d'entrée 11 situé à l'extrémité 8 de l'élément modulaire 1.

En ce qui concerne la virole intérieure 3, celle-ci est équipée d'un rétreint d'entrée 12 disposé à l'extrémité 6 de l'élément modulaire 1.

En outre, le profil comprend une gorge placée à proximité du rétreint d'emboîtement. Pour la virole extérieure 2, la gorge 13 est placée à proximité du rétreint d'emboîtement 7.

Pour la virole intérieure 3, la gorge 14 est disposée à proximité du rétreint d'emboîtement 10. Les gorges 13 et 14, facultatives, permettront d'assurer la liaison entre les différents éléments modulaires constituant une gaine, en coopération avec une bride de liaison comme cela ressort de la description suivante.

En outre, le profil de la virole intérieure 3 comprend une collerette rabattue 15 à son extrémité 8 comprenant la moulure extérieure 9. Le rôle multiple de la collerette rabattue assure une meilleure rigidité de la virole, elle permet de compenser dans l'assemblage des différents éléments modulaires, la dilatation subie par la virole intérieure vis-à-vis de la virole extérieure et de plus elle facilite la fixation des viroles extérieure 2 et intérieure 3.

Selon le mode préférentiel de liaison des viroles extérieure 2 et intérieure 3 de la présente invention, celui-ci est réalisé au moyen d'agrafes de liaison 16 placées entre la collerette rabattue 15 de la virole intérieure 3 et le rétreint d'entrée 11 de la virole extérieure 2.

La fixation des agrafes 16 pourra par exemple être réalisée par soudage.

La figure 3 illustre un détail de l'emboîtement de l'élément modulaire 1 sur l'élément modulaire 17. L'extrémité 8 de la virole 1 qui correspond à la collerette rabattue 15 pénètre entre la virole intérieure 18 et la virole extérieure 19 de l'élément modulaire 17. A ce sujet, un dégagement du matériau isolant thermiquement 4 devra être prévu aux extrémités 6 des éléments modulaires 1 pour autoriser l'emboîtement d'autres éléments modulaires.

La virole extérieure 19 de l'élément modulaire 17 vient s'emboîter autour de rétreint d'emboîtement 7 de la virole extérieure 2 de l'élément modulaire 1. L'étanchéité pourra être obtenue en garnissant la moulure extérieure 20 de la virole 19 d'un joint 21 par exemple en amiante.

En outre, un joint torique 22 pourra être disposé dans la gorge 9 de la virole intérieure 3 de l'élement modulaire 1.

La fixation des éléments modulaires 1 et 17 pourra avantageusement être réalisée à l'aide d'une bride de liaison 23 qui comprend une gorge 24 et une moulure extérieure 25 qui viennent respectivement s'emboîter dans la gorge 13 de l'élément modulaire 1 et la moulure extérieure 20 de l'élément modulaire 17. La bride 23 qui ceinture les éléments modulaires 1 et 17 au niveau de leur raccordement assure une liaison longitudinale et évite tout déboîtement des dits éléments.

La figure 4 schématise un mode préférentiel de réalisation de la bride de liaison 23.

La bride 23 est constituée par une ceinture, généralement métallique 26 est fendue en un point 27 afin de pouvoir être disposée autour des éléments modulaires à assembler. Le serrage de la ceinture 26 pourra être avantageusement réalisé au moyen d'une genouillère 28. Toutefois d'autres modes de fixation tels que ceux généralement utilisés dans les colliers, pourront être utilisés.

La bride de liaison 23 comprend en outre des points 29 et 30 de fixation des équerres 31 de fixation de la bride 23 sur la paroi murale 32.

Dans certaines installations, il est souhaitable de haubanner le conduit des fumées, aussi, selon un mode préférentiel de réalisation de la bride de liaison 23, celle-ci comprend des points 29, 30, 33 et 34 d'ancrage de haubans 35.

Les points de fixation 29, 30, 33 et 34 seront avantageusement des trous fraisés.

Ainsi, la fixation de l'équerre 31 sur la ceinture 26 pourra être réalisée par l'intermédiaire d'une vis à tête fraisée 36 dont la tête 37 ne présentera aucune saillie dans la partie interne de la ceinture 26 qui serait susceptible de gêner la virole extérieure ceinturée.

La mise en place d'haubans 35 pourra être réalisée de façon analogue en utilisant un élément de liaison à tête 38 fraisée.

**Revendications**

1. Elément modulaire de conduit d'un fluide, isolé thermiquement et emboîtable, pour former une gaine, notamment d'évacuation des fumées, destinée à être disposée le long d'un support (32) sur lequel elle est fixée, le dit élément modulaire étant constitué d'une virole extérieure (2) en tôle et d'une virole intérieure (3) en tôle entre lesquelles est disposé un matériau isolant (4), caractérisé par le fait que le profil de la tôle constituant les dites viroles (2 et 3), vue en coupe selon un plan passant par l'axe des viroles, est identique pour les deux viroles (2 et 3), le dit profil comprenant une moulure extérieure (5 ou 9) à une des extrêmités et un rétreint d'emboîtement (7 ou 10) à l'autre extrêmité, le dit profil constituant la virole extérieure (2) étant inversé selon un plan normal à l'axe du conduit, par rapport au dit profil constituant la virole intérieure (3).

2. Elément modulaire de conduit d'un fluide selon la revendication 1, caractérisé par le fait que chacun des dits profils des viroles (2 ou 3) comprend un rétreint (11 ou 12) disposé à l'extrêmité du rétreint d'emboîtement (7 ou 10).

3. Elément modulaire de conduit d'un fluide selon la revendication 1, caractérisé par le fait que chacun des dits profils des viroles (2 ou 3) comprend une gorge (13 ou 14) placée à proximité du rétreint d'emboîtement (7 ou 10) pour le montage d'une bride de liaison (23) de deux éléments modulaires (1; 17) contigus.

4. Elément modulaire de conduit d'un fluide selon la revendication 3, caractérisé par le fait que la bride de liaison (23) de deux éléments modulaires (1; 17) comprend une gorge (24) et une moulure extérieure (25) qui viennent respectivement s'emboîter dans la gorge (13) du premier élément modulaire (1) et dans la moulure extérieure (20) du second élément modulaire (17).

5. Elément modulaire de conduit d'un fluide selon la revendication 4, caractérisé par le fait que la bride de liaison (23) comprend des points (29) et (30) de fixation des équerres (31) de fixation de la bride (23) sur la paroi (32).

6. Elément modulaire de conduit d'un fluide selon la revendication 4, caractérisé par le fait que la bride de liaison (23) comprend des points d'ancrage (29, 30, 33 et 34) de haubans (35).

7. Elément modulaire de conduit d'un fluide selon la revendication 5 ou 6, caractérisé par le fait que les points de fixation (29, 30, 33 et 34) sont formés par des trous fraisés.

8. Elément modulaire de conduit d'un fluide selon la revendication 1, caractérisé par le fait qu'il comporte à l'une de ses extrêmités (8) des moyens de liaison (16) placés entre l'extrêmité correspondante de la virole extérieure (2) et celle de la virole intérieure (3), l'extrêmité (8) du profil de la virole intérieure (3) étant rabattue pour former une collerette (15).

**Patentansprüche**

1. Thermisch isoliertes Bauelement für eine Flüssigkeitsleitung, um einen Kanal, im besonderen einen Rauchabfuhrkanal zu bilden, der entlang einer Stütze (32) aufgestellt und festgelegt wird; das besagte Bauelement besteht aus einem Aussenring (2) aus Blech und einem Innenring (3) aus Blech, zwischen denen ein Isoliermaterial (4) angebracht ist, und ist dadurch gekennzeichnet, dass der Schnitt des Bleches, aus dem die besagten Ringe (2 und 3) bestehen, Querschnitt nach einem Plan in der Achse der Ringe, identisch für die zwei Ringe (2 und 3) ist. In dem besagten Schnitt sind eine Aussenleiste (5 oder 9) an einem äusseren Ende und eine Einbauverengung (7 oder 10) an dem anderen äusseren Ende enthalten. Der besagte Schnitt bildet den Aussenring (2), dadurch dass er nach einem normalen Plan zu der Leitungsachse umgekehrt ist, im Verhältnis zu dem besagten Schnitt, der den Innenring bildet.

2. Bauelement für eine Flüssigkeitsleitung gemäss dem Anspruch 1, dadurch gekennzeichnet, dass jeder der besagten Ringe (2 oder 3) eine Verengung (11 oder 12) enthält, die am Ende der Einbauverengung (7 oder 10) angebracht ist.

3. Bauelement einer Flüssigkeitsleitung gemäss dem Anspruch 1, dadurch gekennzeichnet, dass jeder der besagten Schnitte der Ringe (2 oder 3) einen Hals (13 oder 14) enthält, der sich neben der Einbauverengung (7 oder 10) befindet, um einen Anschlussflansch (23) von zwei angrenzenden Bauelementen (1; 7).

4. Bauelement für eine Flüssigkeitsleitung gemäss dem Anspruch 1, dadurch gekennzeichnet, dass der Anschlussflansch (23) der zwei angrenzenden Bauelemente (1; 17) eine Rille (24) und eine Aussenleiste (25) enthält, die in der Rille (13) des ersten Bauelementes (1), beziehungsweise in der Aussenleiste (20) des zweiten Bauelementes einpassen.

5. Bauelement für eine Flüssigkeitsleitung gemäss dem Anspruch 3, dadurch gekennzeichnet, dass der Aussenflansch (23) Befestigungspunkte (29 und 30) für den Befestigungswinkel (31) des Flansches (23) auf der Wand (32) enthält.

6. Bauelement für eine Flüssigkeitsleitung gemäss dem Anspruch 4, dadurch gekennzeichnet, dass der Anschlussflansch (23) Verankerungspunkte (30, 33 und 34) für Verspannungsdrähte (35) enthält.

7. Bauelement für eine Flüssigkeitsleitung gemäss dem Anspruch 5 oder 6, dadurch gekennzeichnet, dass die Befestigungspunkte (29, 30, 33 und 34) aus versenkten Löchern gebildet sind.

8. Bauelement für eine Flüssigkeitsleitung gemäss dem Anspruch 1, dadurch gekennzeichnet, dass Verbindungsmittel (16) an einem seiner äusseren Ende (8) angebracht sind, zwischen dem entsprechenden Ende des Aussenringes (2) und dem des Innenringes (3); das Ende (8) des Innenringsschnittes ist dabei umgeschlagen, um einen Bund zu bilden (5).

**Claims**

1. Thermally insulated fitted modular element for fluid line, to form a conduit, namely for fume exhaust, designed to be placed along a support (32) on which it is fixed, the said modular element being constituted of a steel sheet external ferrule (2) and a steel sheet internal ferrule (3) between which an insulating material (4) is placed, characterized by the fact that the section of the sheet constituting said ferrules (2&3), cross-section according to a plane in the axis of the ferrules, is identical for both ferrules (2&3), said section comprising an external bead (5 or 9) at one end and a fitting necking (7 or 10) at the other end, the said section constituting the external ferrule (2) being reversed according a normal plane to the line axis with regard to said profile constituting the internal ferrule (3).

2. A modular element for fluid line according to claim 1, characterized by the fact that each of said sections of ferrules (2&3) comprises a necking (11 or 12) placed at the end of the fitting necking (7 or 10).

3. A modular element for fluid line according to claim 1, characterized by the fact that each of said sections of ferrules (2&3) comprises a groove (13 or 14) placed close to the fitting necking (7 or 10) to mount the connecting flange (23) of two contiguous modular elements (1; 17).

4. A modular element for fluid line according to claim 3, characterized by the fact that the connecting flange (23) of two modular elements (1; 17) comprises a groove (24) and an external bead (25) which come to fit respectively into the groove (13) of the first modular element (1) and into the external bead (20) of the second modular element (17).

5. A modular element for fluid line according to claim 4, characterized by the fact that the connecting flange (23) comprises locating points (29) and (30) for the fixing angle brackets (31) of flange (23) onto wall (32).

6. A modular element for fluid line according to claim 4, characterized by the fact that the connecting flange (23) comprises anchoring points (29, 30, 33 and 34) for bracings (35).

7. A modular element for fluid line according to claim 5 or 6, characterized by the fact that the anchoring points (29, 30, 33 and 34) are made of countersunk holes.

8. A modular element for fluid line according to claim 1, characterized by the fact that it includes at one of its ends (8) a connecting means (16) placed between the corresponding end of the external ferrule (2) and that of the internal ferrule (3), the end (8) of the section of the internal ferrule (3) being beaded to make a collar (15).

FIG1

FIG 3

FIG 2

FIG 4